# EUROPÄISCHE PATENTSCHRIFT

(11) **EP 0 374 449 B1**
(45) Veröffentlichungstag und Bekanntmachung des Hinweises auf die Patenterteilung: **02.02.1994**
(21) Anmeldenummer: 89120527.0
(22) Anmeldetag: 06.11.1989
(51) Int. Cl.: H04N 5/64

(54) **Tragbares Fernsehgerät mit Zuordnung einer Teleskopantenne und eines Fernbedienungsgebers**
Portable television apparatus fitted with a telescopic antenna and a remote control transmitter
Téléviseur portatif avec rangement pour antenne télescopique et émetteur de commande à distance

(30) Priorität: 21.12.1988 DE 3842950
(43) Veröffentlichungstag der Anmeldung: 27.06.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Nandzik, Andreas GRUNDIG E.M.V., D-8510 Fürth/Bay (DE)

(56) Entgegenhaltungen:
- DE-A- 2 901 524
- PATENT ABSTRACTS OF JAPAN, Band 10, Nr. 82 (E-392)[2139], 2. April 1986 & JP-A-60 226 284 (MATSUSHITA) 11-11-1985

## Beschreibung

Die Erfindung betrifft ein tragbares Fernsehgerät mit Zuordnung einer Stabantenne und eines Fernbedienungsgebers, wobei die Frontseite des Gerätes von den Abmessungen des Bildschirms bestimmt ist, und die Rückseite des Geräte-Gehäuses, die vorwiegend als abnehmbare Rückwand ausgebildet ist, abgerundete Seitenflächen und entgegen der Geräte-Frontseite verjüngende Außenkonturen aufweist.

Es sind Fernsehgeräte bekannt, bei denen an der Frontseite eine schlitzförmige Öffnung vorgesehen ist, in die bei Nichtbenutzung ein Fernbedienungsgeber eingeschoben werden kann. Dem Fernbedienungsgeber ist somit eine Aufbewahrungsstelle im Fernsehgerät zugeordnet. Bei Herausnahme des Fernbedienungsgebers aus der Frontseite des Fernsehgerätes wird der Öffnungssschlitz mittels einer Verschlußklappe abgedeckt. Ein derartiger Aufbewahrungsort für einen Fernbedienungsgeber an der Frontseite eines Fernsehgerätes ist jedoch aufwendig und bei Fernsehgeräten deren Frontseite vorwiegend aus der Bildschirmfläche bestehen nicht möglich. Nachteilig ist jedoch insbesondere bei tragbaren Fernsehgeräten, wenn dem Fernbedienungsgeber keine Aufbewahrungsstelle im oder am Fernsehgerät zugeordnet ist.

Aufgabe der Erfindung ist es daher, eine einfache Aufbewahrungsmöglichkeit für einen dem Fernsehgerät zugeordneten Fernbedienungsgeber an einem tragbaren Fernsehgerät zu finden, wobei die Formgebung des tragbaren Fernsehgerätes nicht beeinträchtigt werden soll. Ebenso soll die Unterbringung einer Teleskopantenne das Tragen des Gerätes nicht behindern und die zusammengeschobene Teleskopantenne soll geschützt am Gerät untergebracht sein.

Diese Aufgabe wird bei einer Vorrichtung der eingangs genannten Art durch die kennzeichnenden Merkmale im Anspruch 1 gelöst.

Die abhängigen Ansprüche zeigen vorteilhafte Ausgestaltungen der Erfindung.

Die Erfindung wird nachfolgend anhand einer Zeichnung erläutert.

In der vorliegenden Figur ist die Rückseite eines in perspektivischer Darstellung gezeichneten tragbaren Fernsehgerätes mit Zuordnung einer Stabantenne 2 und eines Fernbedienungsgebers 3 zu erkennen. Die Stabantenne ist in dem dargestellten Beispiel als Doppel-Teleskopantenne ausgeführt. Über ein Gelenk ist die Stabantenne schwenk- und verdrehbar angeordnet. Die nicht weiter sichtbare Geräte-Frontseite ist in den Abmessungen nahezu ausschließlich von der Bildschirmgröße geprägt. Die Rückseite des Gerätes, die vorwiegend aus einer vom Geräte-Gehäuse 5 abzunehmenden Rückwand 6 besteht, weist abgerundete Seitenflächen 7 und allseits verjüngende Außenkonturen auf. In der Rückwand 6 des Geräte-Gehäuses ist beidseitig im Außenbereich je eine Vertiefung 8 eingebracht. In diese beiden Vertiefungen ist auf der einen Seite eine umklappbare und zusammenschiebbare Stabantenne 2 eingesetzt, und auf der anderen Seite ist der für das Fernsehgerät erforderliche Fernbedienungsgeber 3 eingelegt. Die Vertiefung 8 in der Rückwand 6 des Gehäuses ist derart ausgeführt, daß der eingelegte Fernbedienungsgeber 3 mit der Deckfläche 9 der Rückwand 6 einen höhengleichen Abschluß bildet. Dies trifft auch für den Abschluß der eingesetzten Stabantenne 2 zu, denn auch dort soll ausgeschlossen sein, daß die Stabantenne während eines Gerätetransportes über die Deckfläche 9 der Rückwand hinausragt. Somit ist für den Transport des Gerätes die Stabantenne und der Fernbedienungsgeber geschützt am Gerät untergebracht bzw. dem Fernbedienungsgeber ist ein bestimmter Aufbewahrungsort zugeordnet. Die Vertiefung 8 auf der Geräte-Rückseite bzw. in der Rückwand des Geräte- Gehäuses kann auch so ausgebildet sein, daß ein eingelegter Fernbedienungsgeber formschlüssig mit der Rückwand verbunden ist und erst bei leichtem Verschieben in Richtung zur Geräte-Frontseite aus der Vertiefung entnommen werden kann. Eine Fixierung des Fernbedienungsgebers in der Vertiefung 8 der Rückwand 6 kann jedoch auf die verschiedenste Art ausgeführt sein. Denkbar ist auch, daß die beiden Vertiefungen über ein Abdeckteil sowohl bei eingelegtem als auch bei aus der Rückwand entnommenem Fernbedienungsgeber zu verschließen sind.

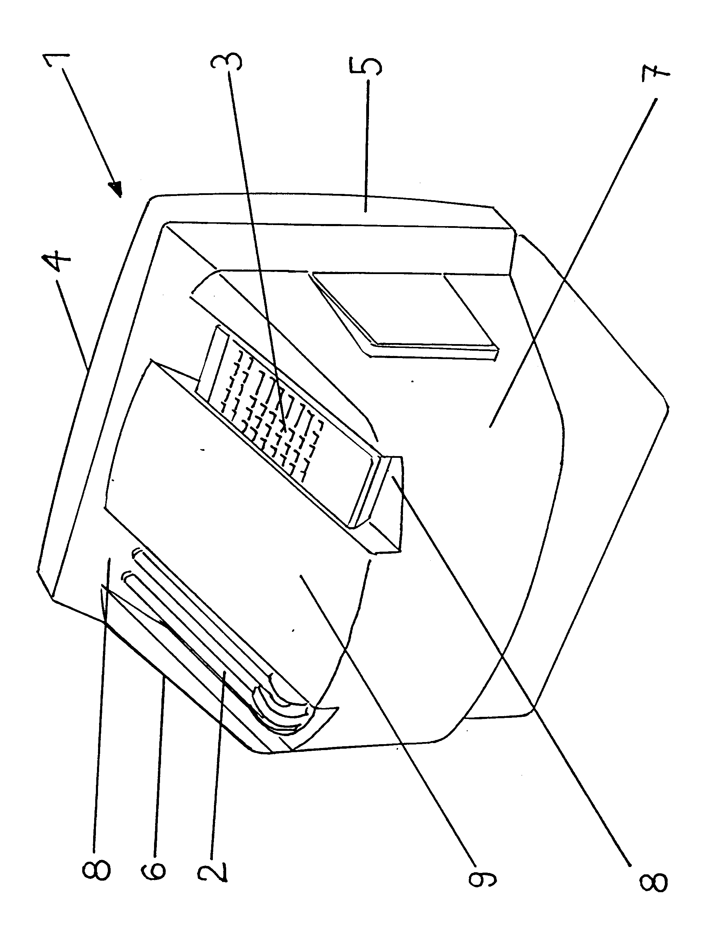

## Patentansprüche

1. Tragbares Fernsehgerät mit Zuordnung einer Stabantenne (2) und eines Fernbedienungsgebers (3), wobei die Frontseite des Gerätes von den Abmessungen des Bildschirms bestimmt ist, und die Rückseite des Gerätegehäuses, die vorwiegend als abnehmbare Rückwand ausgebildet ist, abgerundete Seitenflächen und entgegen der Gerätefrontseite verjüngende Außenkonturen aufweist, **dadurch gekennzeichnet**, daß die Deckfläche (9) der Gehäuserückseite bzw. die der Gehäuse- Rückwand beidseitig im Außenbereich je eine Vertiefung (8) aufweist, daß in der einen Vertiefung eine umklappbare und zusammenschiebbare Stabantenne (2) eingesetzt ist und in der anderen Vertiefung ein Fernbedienungsgeber (3) bedarfsweise eingelegt ist, und daß die Stabantenne (2) und der Fernbedienungsgeber (3) mit der Deckfläche (9) des Geräte-Gehäuses (5) höhengleich abschließen oder gegenüber der Deckfläche (9) zurückgesetzt sind.

2. Tragbares Fernsehgerät nach Anspruch 1, **dadurch gekennzeichnet**, daß die Vertiefung (8) als breite Nut abschnittsweise mit nach innen erweiternden Seitenflächen ausgebildet ist, in die ein Fernbedienungsgeber mit schwalbenschwanzförmigen Querschnitt einzuschieben und formschlüssig gehalten ist.

3. Tragbares Fernsehgerät nach den Ansprüchen 1 und 2, **dadurch gekennzeichnet**, daß wenigstens eine Vertiefung (8) über ein Abdeckteil verschließbar ist, und daß das Abdeckteil als ein Klappteil oder als ein Schiebeteil ausgebildet ist.

## Claims

1. Portable television set with allocation of a rod aerial (2) and a remote control device (3), the front of the set being determined by the dimensions of the screen, and the back of the set housing which is constructed primarily as a removable back wall having rounded side surfaces and outer contours which taper towards the front of the set, characterized in that the covering surface (9) of the back of the housing or that of the back wall of the housing has a depression (8) in the outer region on each side, in that a foldable and collapsible rod aerial (2) is inserted in one depression and a remote control device (3) is placed in the other depression as required, and in that the rod aerial (2) and the remote control device (3) terminate at the same height as the covering surface (9) of the set housing (5) or are set back relative to the covering surface (9).

2. Portable television set according to Claim 1, characterized in that the depression (8) is constructed as a wide groove having in some sections side surfaces which widen towards the inside and in which a remote control device of dovetail-shaped cross-section is to be inserted and is held in a positive-locking manner.

3. Portable television set according to Claims 1 and 2, characterized in that at least one depression (8) can be closed by a covering part, and in that the covering part is constructed as a folding part or as a sliding part.

## Revendications

1. Appareil de télévision portatif, auquel sont associés une antenne en forme de tige (20) et un générateur de télécommande (3), et dans lequel la face avant de l'appareil est déterminée par les dimensions de l'écran, et la face arrière du boîtier de l'appareil, qui est réalisée de façon prépondérante sous la forme d'une paroi arrière amovible, possède des surfaces latérales arrondies et des contours extérieurs qui se rétrécissent à l'opposé de la face avant de l'appareil, caractérisé en ce que la surface supérieure (9) de la face arrière du boîtier ou la surface supérieure de la paroi arrière du boîtier possèdent des renfoncements respectifs (8) situés des deux côtés dans la zone extérieure, qu'une antenne en forme de tige (2) pouvant être déployée et repliée est insérée dans l'un des renfoncements et qu'un générateur de télécommande (3) est inséré le cas échéant dans l'autre renfoncement, et que l'antenne en forme de tige (2) et le générateur de télécommande (3) se terminent à la même hauteur que la surface supérieure (9) du boîtier (5) de l'appareil ou sont en retrait par rapport à la surface supérieure (9).

2. Appareil de télévision portatif selon la revendication 1, caractérisé en ce que le renfoncement (8) est agencé sous la forme d'une rainure large qui présente, par endroits, des surfaces latérales qui s'élargissent en direction de l'intérieur et dans lesquelles un générateur de télécommande possédant une section transversale ayant une forme en queue d'aronde peut être inséré et retenu selon une liaison par complémentarité de formes.

3. Appareil de télévision portatif selon les revendications 1 et 2, caractérisé en ce qu'au moins un renfoncement (8) peut être fermé au moyen d'un élément formant capot et que l'élément formant capot est réalisé sous la forme d'un élément rabattable ou d'un élément coulissant.
